# EUROPÄISCHE PATENTANMELDUNG

(11) **EP 2 221 119 A1**
(43) Veröffentlichungstag der Anmeldung: **25.08.2010**
(21) Anmeldenummer: 09012824.0
(22) Anmeldetag: 09.10.2009
(51) Int. Cl.: B09B 5/00, B08B 7/00, B62D 67/00

(54) **Verfahren und Vorrichtung zum Trennen eines Werkstückes**

(30) Priorität: 23.02.2009 DE 102009010005
(71) Anmelder: Linde AG, 80331 München (DE)
(72) Erfinder: Danzer, Dr. Wolfgang, 84405 Dorfen (DE); Heninger, Rolf, 85635 Höhenkirchen-Siegertsbrunn (DE)
(74) Vertreter: Ganahl, Bernhard

(57) **Zusammenfassung**

Das erfindungsgemäße Verfahren dient zum Trennen eines Werkstücks (2), bei dem zumindest zwei Bauteile (3,4), in einem Verbindungsbereich miteinander verbunden sind. Das Verfahren zeichnet sich dadurch aus, dass das Werkstück (2) zumindest im Verbindungsbereich mit einem cryogenen Medium (7) gekühlt wird, wodurch der Verbindungsbereich beeinträchtigt wird. Alleine durch das Kühlen oder durch das Kühlen und dem Anlegen einer mechanischen Belastung werden die Werkstücke voneinander getrennt.

## Beschreibung

Die vorliegende Erfindung betrifft ein Verfahren und eine Vorrichtung zum Trennen eines Werkstücks, bei dem zumindest zwei Bauteile in einem Verbindungsbereich miteinander verbunden sind.

In den letzten Jahrzehnten kommt dem Thema Recycling insbesondere in der Automobilindustrie eine immer größere Bedeutung zu.

Gleichzeitig setzen die Fahrzeughersteller auf die verschiedensten Materialverbunde, um deren vorteilhafte Eigenschaften in Kombination auszunutzen. Beim Recycling stellt sich jedoch das Problem Verbunde aus verschiedenen Werkstoffen wieder voneinander zu lösen.

Aus dem Stand der Technik bekannte mechanische Trennverfahren sind lediglich in der Lage Mischverbindungen zu zerkleinern, nicht aber diese vor dem Zerkleinern stofflich zu trennen.

Die aus dem Stand der Technik bekannten Trennverfahren sind in der Regel extrem teuer, energieaufwändig und laut.

Aufgabe der vorliegenden Erfindung ist es, ein Verfahren zum Trennen von miteinander verbundenen Metallen bereitzustellen.

Die Aufgabe wird mit einem Verfahren gemäß Anspruch 1 und einer Vorrichtung gemäß Anspruch 8 gelöst. Vorteilhafte Ausgestaltungen sind in den jeweiligen Unteransprüchen angegeben.

Das erfindungsgemäße Verfahren dient zum Trennen eines Werkstücks, bei dem zumindest zwei Bauteile in einem Verbindungsbereich miteinander verbunden sind. Das Verfahren zeichnet sich dadurch aus, dass das Werkstück zumindest im Verbindungsbereich mit einem cryogenen Medium gekühlt wird, wodurch die Verbindung der beiden Bauteile beeinträchtigt wird. Alleine durch das Kühlen oder durch das Kühlen und dem Anlegen einer mechanischen Belastung können die Werkstücke voneinander getrennt werden.

Unter Verbindungsbereich wird im Rahmen der vorliegenden Erfindung der Bereich verstanden in dem die zumindest zwei Bauteile verbunden sind. Die Verbindung kann, bspw. direkt und/oder über materialschlüssige Verbindungen bzw. Verbindungsmittel und/oder über formschlüssige Verbindungen erfolgen.

Mit dem erfindungsgemäßen Verfahren ist es möglich, sämtliche materialschlüssige Verbindungen bzw. Verbindungsmittel im Verbindungsbereich, wie z.B. gelötete oder geschweißte Verbindungen zu lösen. Außerdem ist es sogar möglich formschlüssige Verbindungen bzw. Verbindungsmittel im Verbindungsbereich, wie z.B. Schrauben und Nieten zu lösen. Weiterhin ist es möglich direkte Verbindungen im Verbindungsbereich, wie z.B. Bauteile bei denen zumindest eines der beiden Bauteile durch thermisches Spritzen oder Kaltspritzen auf das andere Bauteil aufgebracht wurde, zu lösen. Bei einer Verbindung durch thermisches Spritzen oder Kaltspritzen bildet die Grenzfläche zwischen den zumindest zwei Bauteilen den Verbindungsbereich aus.

Mittels des erfindungsgemäßen Verfahrens können zwei miteinander verbundene Werkstücke sauber, d.h. nahezu sortenrein voneinander getrennt werden.

Es ist möglich, zwei oder mehr miteinander verbundene Bauteile voneinander zu trennen. Dies gilt nicht nur für Bauteile aus unterschiedlichen Werkstoffen, sondern auch, wenn die Bauteile aus dem gleichen Werkstoff ausgebildet sind. Die Bauteile können z.B. aus Metall und/oder Kunststoff ausgebildet sein.

Es wird ein sehr einfaches Trennverfahren bereitgestellt, bei dem zumindest der Verbindungsbereich und/oder das Verbindungsmittel gekühlt wird, um die beiden Bauteile voneinander zu trennen.

Durch die Abkühlung im cryogenen Medium schrumpfen die beiden Bauteile zusammen und es wirken extreme Spannungen auf das Verbindungsmittel oder den Verbindungsbereich, so dass Risse entstehen. Insbesondere bei Bauteilen aus unterschiedlichen Werkstoffen kommt es aufgrund der unterschiedlichen Wärmeausdehnungskoeffizienten zu großen Spannungen innerhalb des Werkstücks.

Weiterhin bewirkt die Kühlung eine Versprödung des Materialgefüges im Verbindungsbereich (bspw. thermisches Spritzen, Kaltspritzen) bzw. im Verbindungsmittel (bspw. Schrauben, Nieten, Löt-, Schweißverbindung).

Mit dem erfindungsgemäßen Verfahren bleiben die Bauteile im wesentlichen erhalten und werden nicht zerkleinert wie beim Schreddern. Sie können so wesentlich leichter nach den unterschiedlichen Werkstoffen sortiert werden. Das Trennen der Bauteile ist wesentlich einfacher als bei herkömmlichen Trennverfahren, wie z.B. dem Schneiden mittels herkömmlicher spanender oder spanloser Trennverfahren.

Auf diese Weise können hochqualitative, insbesondere sortenreine Ausgangsprodukte wiederhergestellt werden, um daraus Folgeprodukte mit ebenso hoher Qualität herzustellen.

In einer weiteren Ausführungsform des erfindungsgemäßen Verfahrens wird das Werkstück nach dem Kühlen lediglich mit einer mechanischen Kraft beaufschlagt, um es zu trennen.

In einer weiteren Ausführungsform des erfindungsgemäßen Verfahrens werden die beiden Bauteile des Werkstücks auseinander gezogen, um sie voneinander zu trennen.

In einer weiteren Ausführungsform des erfindungsgemäßen Verfahrens wird das Werkstück mit dem Verbindungsmittel über einer Kante angeordnet und dann an beiden zum Verbindungsmittel parallelen Seiten langsam nach unten gedrückt bzw. gleichmäßig mit einer Kraft beaufschlagt, um die Bauteile voneinander zu trennen. Statt einer Kante können auch eine oder mehrere Erhebungen vorgesehen sein, um ein oder mehrere Verbindungsmittel zu lösen.

Vorzugsweise wird das Werkstück im kalten Zustand getrennt. Es kann aber auch vorgesehen sein, das Werkstück unter Normaltemperatur zu trennen, wenn durch die Abkühlung bereits ausreichend Risse entstanden sind. Diese Risse können dann auch unter Normaltemperatur, unter mechanischer Beanspruchung weiter reißen.

Im Folgenden wird die Erfindung anhand der Zeichnungen beispielhaft näher erläutert. Diese zeigen schematisch in:
- Fig. 1: ein erstes Ausführungsbeispiel der erfindungsgemäßen Vorrichtung,
- Fig. 2: ein Ablaufdiagramm des erfindungsgemäßen Verfahrens,
- Fig. 3: ein zweites Ausführungsbeispiel der erfindungsgemäßen Vorrichtung , und
- Fig. 4: ein drittes Ausführungsbeispiel der erfindungsgemäßen Vorrichtung.

Ein erfindungsgemäßes Verfahren bzw. eine erfindungsgemäße Vorrichtung 1 dienen zum Trennen eines Werkstücks 2, bei dem zumindest zwei Bauteile 3, 4 über ein material- und/oder formschlüssiges Verbindungsmittel 5 miteinander verbunden sind. Ein aus zwei solchen Bauteilen bestehendes Werkstück 2 wird zumindest im Bereich des Verbindungsmittels 5 mit einem cryogenen Medium 7 gekühlt. Dies erfolgt mit einer Benetzungseinrichtung 6. Durch das Kühlen wird das Werkstück in seine beiden Bauteile getrennt oder es kann durch Anlegen einer mechanischen Beanspruchung einfach in die Bauteile 3, 4 getrennt werden.

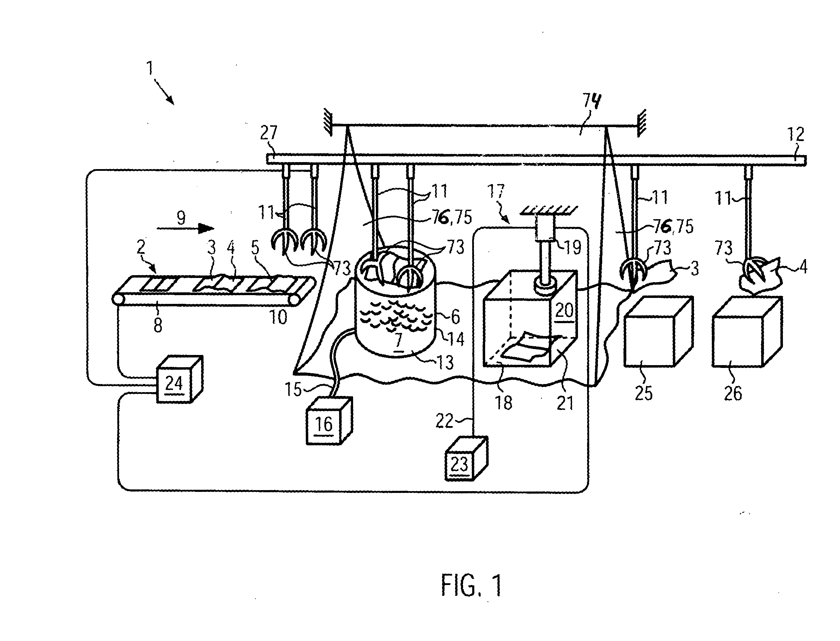

Im Folgenden wird die erfindungsgemäße Vorrichtung 1 anhand eines ersten Ausführungsbeispiels erläutert (Fig. 1).

Die Vorrichtung 1 umfasst eine Transportvorrichtung 8 zum Zuführen von Werkstücken 2 entlang einer Förderichtung 9 hin zur Benetzungseinrichtung 6. Bei diesem Ausführungsbeispiel ist die Transportvorrichtung ein Förderband 8.

Am in Förderrichtung 9 liegenden Ende 10 des Förderbands 5 ist eine Handhabungseinrichtung 27 mit einem oder mehreren Greifarmen 11 angeordnet. Die Greifarme 11 befinden sich oberhalb des Förderbands 5 und sind horizontal entlang einer Schiene 12 verfahrbar. Die Greifarme 11 weisen jeweils eine Greifzange 73 auf, die an einem Hubmechanismus angeordnet ist, so dass die Greifzange 73 angehoben und abgesenkt werden kann. Die Greifarme 11 sind zum Greifen der Werkstücke 2 vom Förderband 8 ausgebildet.

Neben dem Ende 10 des Förderbandes 8 ist die Benetzungseinrichtung 6 angeordnet.

Vom Ende 10 des Förderbands 5 sind die Greifarme 11 über die Schiene 12 in Richtung der Benetzungseinrichtung 6 verfahrbar.

Die Benetzungseinrichtung 6 ist als cryogenes Mediumbad ausgebildet. Das cryogene Mediumbad 6 umfasst ein zylindrisches nach oben offenes Becken 13. Das Becken 13 ist mit einer thermischen Isolierung 14 versehen. Es weist eine Zuführleitung 15 zum Zuführen von cryogenem Medium 7 aus einer cryogenen Mediumquelle 16 auf. Das Becken 13 ist mit einem cryogenen Medium 7, vorzugsweise mit flüssigem Stickstoff, gefüllt.

Neben dem cryogenen Mediumbad 6 ist eine Trenneinrichtung 17 angeordnet.

Vom cryogenen Mediumbad 6 sind die Greifarme 11 über die Schiene 12 bis in den Bereich über der Trenneinrichtung 17 verfahrbar.

Die Trenneinrichtung 17 umfasst einen Behälter 18 und einen automatischen Hammer 19.

Der Behälter 18 ist ein quadratischer nach oben offener Behälter mit Seitenwandungen 20 und einer Bodenplatte 21. Die Bodenplatte 21 ist aus einem unelastischen Material, wie z.B. Stahl, ausgebildet. Die Höhe der Seitenwandungen 20 ist derart gewählt, dass Teile die beim Trennen des Werkstücks 2 weggeschleudert werden, sicher aufgehalten werden und niemand gefährdet wird.

Oberhalb des Behälters 18 ist der automatische Hammer 19 zum schlagartigen Aufbringen einer mechanischen Belastung auf das Werkstück 2 angeordnet. Der automatische Hammer 19 wird mit Pressluft betrieben. Der automatische Hammer 19 ist über eine Leitung 22 mit einer Pressluftquelle 23 verbunden.

Das cryogene Mediumbad 6, die Trenneinrichtung 17 und der über dem Mediumbad 6 und der Trenneinrichtung angeordnete Bereich der Schiene 12 sind von einer Manschette 74 umgeben. Die Manschette 74 ist z.B. zeltartig ausgebildet. Durch die Manschette 74 wird das aus dem cryogenen Mediumbad 6 verdampfende gasförmige cryogenen Medium im Bereich des Mediumbades 6 und der Trenneinrichtung 17 gestaut. Die Manschette 74 weist in Förderichtung 9 und entgegen der Förderichtung Öffnungen 75 auf, durch die die Werkstücke mittels der Greifarme 11 zu- und abgeführt werden. Die Öffnungen 75 sind z.B. mittels Streifenvorhängen 76 verschlossen, um ein übermäßiges Austreten von verdampftem cryogenen Medium zu verhindern. Mittels der Manschette wird die Temperatur im Bereich der Trenneinrichtung 17 durch das im cryogenen Mediumbad 6 verdampfende cryogene Medium 7 niedrig, z.B. unter -50°C bzw. unter -70°C bzw. unter -100°C gehalten. Dadurch bleiben die Werkstücke 2 länger kalt und spröde und können noch leichter getrennt werden.

Bei Verwendung von Stickstoff als cryogenes Medium, der leichter als Luft ist, ist die Manschette 74 nach unten offen, so dass überschüssiger Stickstoff nach unten entweichen kann.

Das Förderband 8, die Handhabungseinrichtung 27 und der automatische Hammer 19 sind mit einer Steuereinrichtung 24 verbunden.

Unmittelbar neben der Trenneinrichtung 17 sind zwei nach oben offene Transportbehälter 25, 26 angeordnet, in denen die getrennten Bauteile 3, 4 des Werkstücks 2 separat aufbewahrt werden.

Im Folgenden wird das erfindungsgemäße Verfahren zum Trennen eines beispielhaften Werkstücks anhand des oben beschriebenen Ausführungsbeispiels erläutert.

Das Werkstück 2 umfasst zwei in etwa quadratische Bauteile 3, 4. Das Bauteil 3 ist aus einem Eisenblech und das Bauteil 4 ist aus einem Aluminiumblech ausgebildet. Die beiden Bauteile 3, 4 sind über ein Verbindungsmittel 5 materialschlüssig miteinander verbunden. Das Verbindungsmittel 5 ist ein Fügematerial. Als Fügematerial 5 wird das Material bezeichnet, das beim Erzeugen einer Lot- /Schweißverbindung im Bereich zwischen den beiden Blechen 3, 4 aufgetragen wird.

Das Fügematerial 5 wird als Schmelze zwischen dem Aluminiumblech 4 und dem Eisenblech 3 aufgetragen. Die Liquidustemperatur des Aluminiumblechs 4 ist geringer als die Liquidustemperatur des Eisenblechs 3. Beim Auftragen der Schmelze wird die Temperatur derart eingestellt, dass das Aluminiumblech 4 aufschmilzt und mit dem Fügematerial 5 eine Schweißverbindung bildet. Die Temperatur ist jedoch zum Aufschmelzen des Eisenblechs zu gering, weshalb das Fügematerial 5 mit dem Eisenblech lediglich eine Lötverbindung bildet. Die Lötverbindung weist geringere Bindungskräfte auf als die Schweißverbindung Aufgrund der unterschiedlichen Schmelzpunkte von Aluminium und Eisen wird also eine Schweißverbindung zwischen dem Aluminiumblech 4 und dem Fügematerial 5 und eine Lotverbindung zwischen dem Eisenblech 3 und dem Fügematerial 5 ausgebildet. Die gesamte Verbindung zwischen den beiden Bauteilen 3, 4 kann somit als Lot-/Schweißnaht bezeichnet werden.

Das Werkstück 2 wird auf dem Förderband 8 in Förderrichtung 9 transportiert.

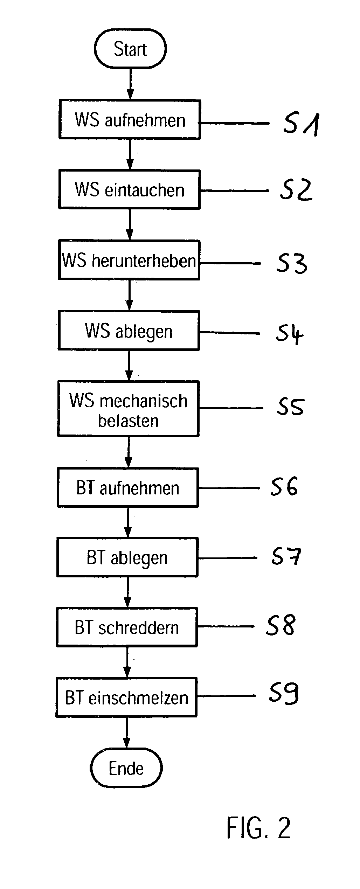

Am Ende 10 des Förderbands 8 wird das Werkstück 2 von zwei Greifarmen 11 gegriffen und angehoben, wobei ein Greifarm 11 das Eisenblech 3 und ein Greifarm das Aluminiumblech 4 greift (Schritt S1, Fig. 2).

Die Greifarme 11 verfahren über die Schiene 12 zum cryogenen Mediumbad 6. Die Greifarme 11 tauchen das Werkstück 2 in das mit flüssigem Stickstoff 7 gefüllte cryogene Mediumbad 6 (Schritt S2). Auf diese Weise wird das Werkstück 2 schlagartig auf eine Temperatur von bis zu -196°C abgekühlt.

Aufgrund der unterschiedlichen Wärmeausdehnungskoeffizienten bzw. thermischen Ausdehnungskoeffizienten des Aluminiumblechs 4 und des Eisenblechs 3 schrumpfen die beiden Bauteile unterschiedlich stark. Dadurch wird das Fügematerial 5 bzw. die Lot-/Schweißnaht extremen Spannungen ausgesetzt. Zusätzlich kann es zu einer Versprödung der Bauteile 3, 4 und insbesondere des Fügematerials 5 kommen. Die geringsten Bindungskräfte wirken aufgrund der Lötverbindung zwischen dem Eisenblech 3 und dem Fügematerial 5.

Hier kann es bereits im cryogenen Mediumbad 6 dazu kommen dass die Verbindung zwischen dem Fügematerial 5 und dem Eisenblech 3 komplett aufbricht bzw. reißt und die beiden Bauteile 3, 4 voneinander getrennt werden.

Die Greifarme 11 heben dann die beiden getrennten Bauteile 3, 4 nacheinander aus dem cryogenen Mediumbad 7 (Schritt S3).

Anschließend verfahren die Greifarme 11 über die Schiene 12 in Richtung der Transportbehälter 25, 26. Dort legt der Greifarm 11 dann das Eisenblech 3 im Transportbehälter 25 und der andere Greifarm 11 legt das Aluminiumblech 4 im Transportbehälter 26 ab.

In der Regel treten jedoch lediglich kleine Risse bzw. Haarrisse zwischen dem Eisenblech 3 und dem Fügematerial 5 auf. Daher sind die beiden Bauteile 3, 4 noch nicht vollständig voneinander getrennt.

In diesem Fall verfahren die Greifarme 11 über die Schiene 12 in Richtung der Trenneinrichtung 17 und legen das Werkstück 2 horizontal auf die Bodenplatte 21 des Behälters 18 (Schritt S4). Dies erfolgt vorzugsweise so schnell, dass das Werkstück 2 sehr kalt ist und z.B. eine Temperatur von unter -50°C, vorzugsweise unter -100°c aufweist. Der automatische Hammer 19 wird pneumatisch betätigt und beaufschlagt das Werkstück 2 im Bereich des Verbindungsmittels schlagartig mit einer mechanischen Belastung (Schritt S5). Aufgrund der Spannungen, die auf das Werkstück 2 und insbesondere auf das Verbindungsmittel 5 bzw. die Lot-/Schweißnaht wirken, zerbricht das Werkstück 2 in die zwei Bauteile 3, 4. Bei diesem Werkstück bildet sich der Riss aus den oben genannten Gründen zwischen dem Eisenblech 3 und dem Fügematerial 5 aus. Das Fügematerial 5 verbleibt somit nach dem Trennen auf dem Aluminiumblech 4.

Auf diese Weise wird das Werkstück 2 wieder in ein Eisenblech 3 und ein Aluminiumblech 4 getrennt. Die Seitenwandungen 20 des Behälters 18 halten evtl. herumfliegende Teile des Werkstücks 2 sicher und zuverlässig auf.

Die Greifarme 11 heben dann die beiden getrennten Bauteile 3, 4 nacheinander aus der Trenneinrichtung 17 (Schritt S6).

Die Greifarme 11 verfahren über die Schiene 12 in Richtung der Transportbehälter 25, 26. Dort legt der Greifarm 11 dann das Eisenblech 3 im Transportbehälter 25 und der Greifarm 11 legt das Aluminiumblech 4 im Transportbehälter 26 ab (Schritt S7).

Im Anschluss können die Eisenbleche und die Aluminiumbleche separat geschreddert (Schritt S8) und danach wiederverwertet werden. Die Wiederverwertung erfolgt über Einschmelzen (Schritt S9) im Hochofen. Durch das erfindungsgemäße Verfahren wird eine nahezu sortenreine Trennung der Werkstoffe sichergestellt. Auf diese Weise können auch qualitativ hochwertige Folgeprodukte erzeugt werden.

Ein weiteres beispielhaftes Werkstück, das mit dem erfindungsgemäßen Verfahren getrennt werden kann, ist aus zwei Bauteilen aus dem gleichen Metall ausgebildet. Das Werkstück besteht aus zwei Eisenblechen, die über eine Schweißnaht miteinander verbunden sind. Aufgrund der Versprödung der Schweißnaht durch das Kühlen können diese ebenfalls gemäß dem oben beschriebenen Verfahren getrennt werden. Hierbei ist in der Regel eine mechanische Beanspruchung nötig, um die beiden Bauteile voneinander zu trennen. Eine schlagartige mechanische Beanspruchung bzw. Belastung wird vorzugsweise im Bereich der Schweißnaht aufgebracht.

Es kann auch vorgesehen sein, ein Werkstück aus zwei Kunststoffteilen oder Werkstücke aus Kunststoff und Metall mittels des erfindungsgemäßen Verfahrens voneinander zu trennen. Insbesondere ist vorgesehen Bauteile von denen zumindest eines durch thermisches Spritzen oder Kaltspritzen ohne ein zusätzliches Verbindungsmittel direkt auf das andere Bauteil aufgebracht wurde voneinander zu trennen.

Ein weiteres Beispiel für ein Werkstück, das mit dem erfindungsgemäßen Verfahren getrennt werden kann, ist z.B. ein Werkstück mit zwei Bauteilen, die über ein formschlüssiges Verbindungsmittel miteinander verbunden sind. Als Verbindungsmittel sind z.B. Nieten vorgesehen. Ein derartiges Werkstück kann ebenfalls gemäß dem oben beschriebenen Ausführungsbeispiel getrennt werden. Durch die starken Verspannungen beim Kühlen werden die durch das Kühlen versprödeten Nieten stark mechanisch beansprucht. Das allein kann schon zum Bruch eines Großteils der Nieten führen. Sollten die Spannungen nicht ausreichen wird das Verbindungsmittel im Anschluss an das Kühlen noch zusätzlich mechanisch belastet, was dann zum Bruch aller Nieten führt.

Dieses Verfahren ist auch zum Trennen von Schraubenverbindungen geeignet.

Statt des automatischen Hammers kann auch eine Zugeinrichtung vorgesehen sein, die z.B. an beiden Bauteilen fixiert wird und diese dann mechanisch auseinander zieht, bis das Werkstück entlang des Verbindungsmittels reißt.

Es kann auch vorgesehen sein, das Werkstück über eine Kante oder eine andere Erhebung zu legen und dann die beiden Bauteile 3, 4 mit Druck zu beaufschlagen, so dass sie auseinander brechen, um sie zu trennen. Der Druck wird hier langsam, d.h. nicht schlagartig angelegt.

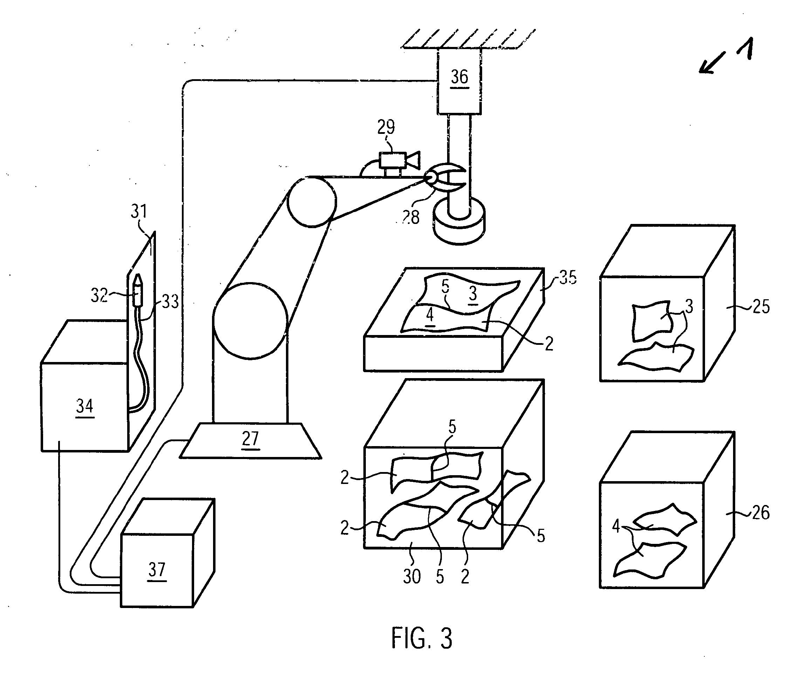

Im Folgenden wird die erfindungsgemäße Vorrichtung 1 anhand eines zweiten Ausführungsbeispiels beschrieben (Fig. 3).

Die Vorrichtung 1 weist eine ortsfeste Handhabungseinrichtung 27 auf. Die Handhabungseinrichtung ist ein ortsfester Roboterarm 27. Der Roboterarm 27 weist an seinem Ende einen Greifer 28 auf, um Werkstücke 2 greifen zu können. Am Ende des Roboterarms 27 ist eine Kamera 29 vorgesehen.

Neben dem Roboterarm 27 ist ein Behälter 30 angeordnet. Der Behälter 30 ist mit zu trennenden Werkstücken 2 gefüllt.

In unmittelbarer Nähe zum Roboterarm 27 ist ein Magazin 31 angeordnet. Im Magazin 31 ist eine Düse 32 zum Ausgeben eines cryogenen Mediums 7 ausgebildet. Als cryogenes Medium ist Stickstoff vorgesehen. Die Düse 32 ist über eine Leitung 33 mit einer cryogenen Mediumsquelle 34 verbunden. Der Roboterarm 27 und die Düse 32 bilden die Benetzungseinrichtung 6 zum Benetzen des Werkstücks 2 mit einem cryogenen Medium 7 aus.

Neben dem Roboterarm 27 ist eine Arbeitsplattform 35 angeordnet. Die Arbeitsplattform 35 ist aus einem harten unelastischen Material wie z.B. Stahl ausgebildet. Zum Schutz vor herumfliegenden Teilen kann die Arbeitsplattform 35 Seitenwandungen aufweisen.

Über der Arbeitsplattform 35 ist ein automatischer Hammer 36 derart angeordnet, dass der Hammer 36 auf ein sich auf der Arbeitsplattform 35 befindliches Werkstück 2 schlagen kann.

Der Roboterarm 27, die Düse 32 und der Hammer 36 sind mit einer Steuereinrichtung 37 verbunden.

Neben der Arbeitsplattform 35 sind zwei Transportbehälter 25, 26 vorgesehen.

Auch beim zweiten Ausführungsbeispiel der erfindungsgemäßen Vorrichtung kann eine Manschette vorgesehen sein, um den Bereich der Arbeitsplattform zu kühlen. Dadurch können die Bauteile leichter voneinander getrennt werden. Die Manschette kann sich z.B. komplett über die Arbeitsplattform 35 und den automatischen Hammer 36 erstrecken und eine Öffnung für den Roboterarm 27 aufweisen.

Im Folgenden wird das erfindungsgemäße Verfahren zum Trennen eines Werkstücks anhand des zweiten Ausführungsbeispiels beschrieben.

Der Roboterarm 27 greift mit seinem Greifer 28 ein Werkstück 2 aus dem Behälter 30. Das Werkstück 2 ist gemäß dem ersten Ausführungsbeispiel ausgebildet.

Der Roboterarm 27 ordnet das Werkstück 2 auf der Arbeitsplattform 35 an.

Der Roboterarm 27 verfährt dann seinen Greifer 28 zum Magazin 31. Mit dem Greifer 28 entnimmt der Roboterarm 27 die Düse 22 aus dem Magazin 31.

Mittels der am Ende des Greifers 32 angeordneten Kamera 19 detektiert der Roboterarm 17 das Verbindungsmittel bzw. die Lot- und/oder Schweißnaht 5 auf dem Werkstück 2.

Mit der Düse 32 besprüht der Roboterarm zumindest den Bereich des Fügematerials bzw. der Lot- und/oder Schweißnaht 5 aber vorzugsweise einen breiten Bereich um die Fügeverbindung 5 oder das gesamte Werkstück 2 mit flüssigem Stickstoff 7.

Im nächsten Schritt wird der automatische Hammer 36 betätigt, der einmal auf das Werkstück 2 einschlägt wodurch es in zwei Teile bricht, z.B. in das Eisenblech 3 und in das Aluminiumblech 4.

Der Roboterarm 27 greift mit seinem Greifer 28 zunächst das Eisenblech 3 und ordnet es im Behälter 25 an. Dann greift er das Aluminiumblech 4 und ordnet es im Behälter 26 an.

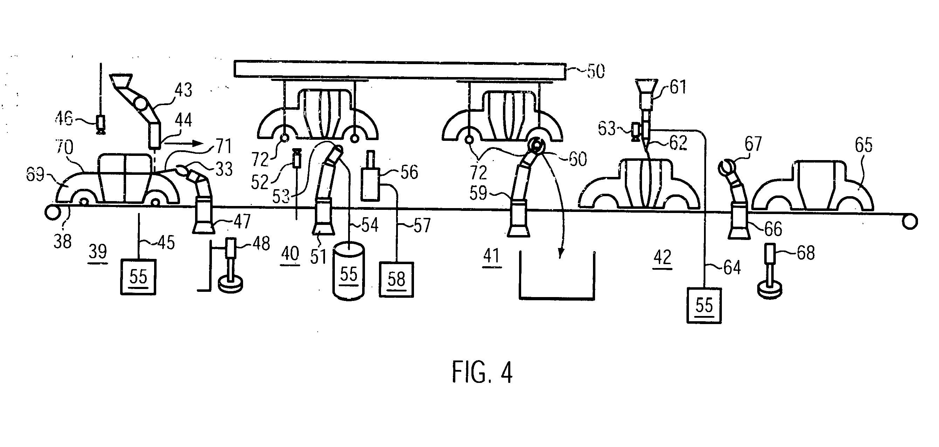

Im Folgenden wird die erfindungsgemäße Vorrichtung anhand eines dritten Ausführungsbeispiels beschrieben (Fig. 4). Das dritte Ausführungsbeispiel beschreibt eine Demontagestraße zum systematischen, schrittweisen Zerlegen von Kraftfahrzeugen 69.

Die Demontagestraße umfasst ein Fließband 38. Entlang dieses Fließbands 38 erstrecken sich aufeinanderfolgend 4 Demontageabschnitte 39, 40, 41, 42.

Um die zu trennenden Bereiche bzw. die Verbindungsmittel zu detektieren ist im ersten Demontageabschnitt 39 oberhalb des Fließbands 38 eine Zeilenkamera 46 vorgesehen. Die Zeilenkamera erzeugt ein vollständiges Bild von der Oberseite des auf dem Förderband unter der Kamera 46 hindurch bewegten Autos 69.

Im ersten Demontageabschnitt 39 ist oberhalb des Fließbands 38 ein beweglicher Roboterarm 43 angeordnet. Der Roboterarm 43 weist eine Benetzungseinrichtung auf, die als Düse 44 zum Ausgeben von flüssigem Stickstoff ausgebildet ist. Die Düse 44 ist über eine Leitung 45 mit einer Stickstoffquelle 80 verbunden. Die Düse 44 ist zum Benetzen eines Kraftfahrzeugs mit cryogenem Medium, insbesondere im Bereich der Scharniere der Motorhaube und des Kofferraumdeckels, ausgebildet.

Im ersten Demontageabschnitt ist ein zweiter Roboterarm 47 vorgesehen, der seitlich neben dem Fließband 38 angeordnet ist. Der zweite Roboterarm 47 weist einen Greifer 33 auf. Der Greifer 33 ist zum Greifen von Werkstücken 2 und zum Aufnehmen eines Hammers 48 ausgebildet. Der Hammer 48 ist in einem Magazin neben dem Fließband 38 angeordnet.

Im zweiten Demontageabschnitt 40 ist über dem Fließband 38 eine Hubeinrichtung 50 angeordnet, um ein Fahrzeug vom Fließband 38 anzuheben. Die Hubeinrichtung 50 erstreckt sich bis in den dritten Demontageabschnitt 41.

Um die zu trennenden Bereiche zu detektieren ist im zweiten Demontageabschnitt 40 seitlich neben dem Fließbands 38 eine Zeilenkamera 52 vorgesehen. Die Zeilenkamera 52 erzeugt ein vollständiges Bild von der Unterseite des auf dem Förderband über der Kamera 46 hindurch bewegten Autos.

Im zweiten Demontageabschnitt 40 ist neben dem Fließband 38 ein dritter Roboterarmarm 51 angeordnet. Der dritte Roboterarmarm 51 ist mit einer Düse 53 zum Aufbringen eines cryogenen Mediums versehen. Die Düse 53 ist über eine Leitung 54 mit einer Stickstoffquelle 55 verbunden.

In diesem Abschnitt 40 ist ein automatischer Hammer 56 angeordnet. Der Hammer 56 ist über eine Leitung 57 mit einer Pressluftversorgungsquelle 58 verbunden.

Im dritten Demontageabschnitt ist 41 ein vierter Roboterarm 59 angeordnet. Der Roboterarm 59 weist am Ende einen Greifer 60 auf.

Im vierten Demontageabschnitt ist oberhalb des Fließbandes 38 ein fünfter Roboterarm 61 angeordnet. Dieser Roboterarm 61 weist eine Düse 62 zum Ausgeben eines cryogenen Mediums und eine Kamera 63 auf. Die Kamera 63 erzeugt ein vollständiges Bild von beiden Seiten des Autos. Die Düse 62 ist über eine Leitung 64 mit einer Stickstoffquelle verbunden.

Seitlich neben dem Fließband 38 ist ein sechster Roboterarmarm 66 angeordnet. Der sechste Roboterarm 66 weist einen Greifer 67 zum Aufnehmen von Werkstücken 2 und zum Aufnehmen eines automatischen Hammers 68 auf.

Im Folgenden wird das erfindungsgemäße Verfahren anhand des dritten Ausführungsbeispiels der erfindungsgemäßen Vorrichtung beschrieben.

Vorzugsweise wird vorab die Fahrgestellnummer des Autos eine zentrale Steuereinrichtung eingegeben. Anhand dieser Fahrgestellnummer können aus einer Datenbank die für das Zerlegen des Autos wesentlichen Daten (Form, Verbindungsstellen, Nähte, Werkstoffe) ausgelesen werden. Hierdurch ist es möglich unterschiedliche Typen von Automobilen sehr effizient automatisch zu zerlegen.

Gemäß diesem Verfahren wird ein zu demontierendes bzw. zu recycelndes Kraftfahrzeug 69 auf dem Fließband 38 angeordnet.

Im ersten Demontageabschnitt ermittelt die Kamera 46 des ersten Roboterarmarms 43 die Bereiche in denen die Scharniere der Motorhaube 70 und des Kofferraumdeckels 71 angeordnet sind.

Dann sprüht der erste Roboterarm 43 diese Bereiche mittels der Düse 44 mit Stickstoff ein. Dies führt zu starken Verzügen im Bereich der Scharniere.

Der zweite Roboterarm 47 nimmt mit seinem Greifer 33 den automatischen Hammer 48 auf. Dann wird der Hammer 48 betätigt und somit wird das Scharnier des Kofferraumdeckels 71 schlagartig mechanisch belastet. Die Scharniere brechen, da sie durch die tiefe Temperatur spröde sind. Es ist auch möglich, dass gezielt die Schweißverbindung zwischen den Scharnieren und dem Kofferraumdeckel 71 gelöst wird. Anschließend wir der Hammer 48 abgelegt und der zweite Roboterarm 47 entfernt den Kofferraumdeckel 71 und ordnet diesen in einem entsprechenden Behälter an.

Im nächsten Arbeitsschritt wird entsprechend dem ersten Arbeitsschritt die Motorhaube 70 entfernt.

Im Anschluss verfährt das Fließband 38 das Kraftfahrzeug 69 in den zweiten Demontageabschnitt 40. Im zweiten Demontageabschnitt 40 wird das Kraftfahrzeug 69 von einer Hubeinrichtung 50, die die Karosserie des Fahrzeugs an den vier Kotflügeln anhebt, hochgehoben.

Die Kamera 52 detektiert die Verbindungsbereiche zwischen Vorderachse und Karosserie die gelöst werden müssen, um das Fahrzeug 69 vom Fahrgestell 72 zu trennen.

Im nächsten Arbeitsschritt benetzt der Roboterarm 51 mittels der Düse 53 diese Bereiche mit dem cryogenen Medium.

Dann nimmt der Roboterarm 51 mit dem Greifer den automatischen Hammer 56 auf und belastet diese Bereiche ein- oder mehrmalig mechanisch.

Im dritten Demontagebereich 59 greift der Roboterarmarm 61 die abgetrennten bzw. gelösten Fahrwerksteile von der Karosserie und ordnet diese in einem Behälter an.

Im vierten Demontageabschnitt 42 detektiert die Kamera 63 zunächst die Schweißnähte mit denen die B-Säule an der Karosserie verschweißt ist.

Anschließend besprüht der Roboterarm 61 diese Bereiche mit cryogenem Medium.

Der Roboterarm 66 nimmt mit seinem Greifer 67 den automatischen Hammer 68 auf. Über den automatischen Hammer 68 werden die gekühlten Bereiche schlagartig mechanisch belastet und die Schweißnähte brechen auf.

Der Roboterarm 66 legt den Hammer 68 ab und entfernt mit seinem Greifer die B-Säule und ordnet diese in einem Behälter an.

Bei einer erfindungsgemäßen Demontagestrasse können auch ein oder mehrere Behälter mit cryogenem Medium vorgesehen sein. Einzelne Baugruppen eines Fahrzeugs werden dann z.B. mittels Laserschneiden oder einem anderen herkömmlichen Trennverfahren vom Fahrzeug entfernt. Anschließend werden diese in einen Behälter mit cryogenem Medium getaucht und danach gegebenenfalls mechanisch beaufschlagt, um sie sortenrein zu trennen.

Beim Recyceln von Fahrzeugen ist problematisch, dass verschiedene Modelle aus unterschiedlichen Baureihen recycelt werden müssen. Das bedeutet, dass auch die einzelnen Bauteile unterschiedlich angeordnet, befestigt und ausgebildet sind. Zudem sind die Unterschiedlichsten Verbindungstechniken, wie z.B. Schweißen. Löten, Schrauben, Nieten und Kleben usw., an den Fahrzeugen vorgesehen. Aus diesem Grund ist es äußerst schwierig und komplex eine Demontagestraße auszubilden die für die verschiedenen Fahrzeugmodelle und Verbindungstechniken gleichermaßen geeignet ist.

Die erfindungsgemäße Demontagestrasse bietet zahlreiche Möglichkeiten diese Probleme zu lösen. Mit dem erfindungsgemäßen Verfahren können nahezu alle bekannten material- und formschlüssigen Verbindungen gelöst werden. Das gesamte Verfahren ist gemäß dieser erfindungsgemäßen Vorrichtung automatisch ausführbar. Da es sich um ein cryogenes Medium handelt, kommt es zu keinerlei Verschmutzungen durch z.B. Späne, da das Medium bei Raumtemperatur vollständig verdampft.

Kraftfahrzeuge sind in der Regel für einen Betrieb bis maximal -70°C ausgelegt. Durch das erfindungsgemäße Kühlen verspröden insbesondere die Verbindungsbereiche der Karosserieteile und des Fahrwerks. Werden dann atypische thermische lokale Belastungen auf diese Verbindungsbereiche ausgeübt, beeinträchtigen diese thermischen Belastungen die mechanische Stabilität der Verbindungen. Auf diese Weise lassen sich Fahrzeuge relativ einfach sortenrein trennen.

Bei den oben beschriebenen Vorrichtungen kann an Stelle der Greifarme, um die Bauteile aus dem Behälter zu heben, auch vorgesehen sein, dass der Behälter einen aufklappbaren Boden (nicht dargestellt) aufweist. Der Boden des Behälters kann dann nach dem Trennen des Werkstücks 2 geöffnet werden, so dass die Bauteile 3, 4 nach unten herausfallen. Unterhalb des Behälters ist dann eine Transporteinrichtung ausgebildet, um die getrennten Bauteile abzutransportieren. Diese können dann z.B. magnetisch voneinander getrennt werden. Der Behälter kann auch mit einer wegklappbaren Seitenwandung versehen und in die Richtung der Seitenwandung kippbar ausgebildet sein, um die Bauteile aus dem Behälter zu entfernen. Neben dem Behälter ist dann wieder eine Transporteinrichtung angeordnet, um die Bauteile abzutransportieren. Die Transporteinrichtung ist z.B. ein Förderband.

Das erfindungsgemäße Verfahren lässt sich gezielt und lokal begrenzt einsetzen, da das cryogene Medium mittels beweglichen Düsen lokal und exakt dosierbar aufgetragen werden kann. Dies ist insbesondere mit einer optischen Abtastung vorteilhaft, da hier zu trennende Bereiche exakt detektierbar sind. Dadurch lässt sich das erfindungsgemäße Verfahre mit anderen Trennverfahren wie z.B. Schneiden oder Schweißen optimal kombinieren

Am schnellsten kann ein Werkstück getrennt werden, wenn es vollständig in ein cryogenes Mediumbad eingetaucht wird.

Das Trennen erfolgt vorzugsweise bei Temperaturen von nicht mehr als -50°C bzw. - 80°C, bzw. -100°C, bzw. -120°C bzw. -150°C bzw. -180°C.

Das Trennen des Werkstücks kann sowohl im kalten Zustand als auch im warmen bzw. wiedererwärmten Zustand erfolgen. Das Trennen im wiedererwärmten Zustand ist in der Regel aber nur bei Werkstücken bzw. Verbindungsmitteln möglich die eine geringe Kaltzähigkeit aufweisen. Werkstücke mit hoher Kaltzähigkeit bzw. deren Verbindungsmittel sind lediglich im kalten Zustand spröde.

Das Trennen von Bauteilen bringt viele Vorteile. So erfolgt das Trennen rückstandsfrei, da das cryogene Medium vergast. Das cryogene Medium kann lokal begrenzt appliziert werden. Es können unterschiedlich große Verbindungsbereiche getrennt werden. Die Intensität der Kühlung kann je nach Bedarf variiert werden. In einer Zerlegestrasse ist insbesondere von Vorteil, dass das cryogene Kühlen mit beliebigen anderen erprobten bzw. neuen Verfahren zum Zerlegen eines Automobils kombiniert werden kann.

Das erfindungsgemäße Verfahren ist auch bei Werkstücken durchführbar, die zwei oder mehr Bauteile umfassen.

Für den Fall dass eine besonders sortenreine Trennung der Werkstücke erforderlich ist, kann auch vorgesehen sein, den Lack auf den Werkstücken mittels eines CO₂-Reinigungsverfahrens zu entfernen.

In der Regel ist als cryogenes Medium Stickstoff vorgesehen. Es kann aber auch ein anderes geeignetes Medium wie z.B. cryogenes CO₂ verwendet werden.

Mit dem erfindungsgemäßen Verfahren können zwei oder mehr miteinander verbundene Bauteile voneinander getrennt werden. Dies gilt für Bauteile aus unterschiedlichen Werkstoffen und auch wenn die Bauteile aus dem gleichen Werkstoff ausgebildet sind. Die Bauteile können aus beliebigen Werkstoffen ausgebildet sein, wie z.B. aus Metall und/oder Kunststoff.

### Bezugszeichenliste

- 1: Vorrichtung
- 2: Werkstück
- 3: Bauteil
- 4: Bauteil
- 5: Verbindungsmittel
- 6: Benetzungseinrichtung, cryogenes Mediumbad
- 7: cryogenes Medium
- 8: Transporteinrichtung, Förderband
- 9: Förderrichtung
- 10: Ende
- 11: Greifarm
- 12: Schiene
- 13: Becken
- 14: Isolierung
- 15: Zuführleitung
- 16: cryogene Mediumquelle
- 17: Trenneinrichtung
- 18: Behälter
- 19: automatischer Hammer
- 20: Seitenwandung
- 21: Bodenplatte
- 22: Leitung
- 23: Pressluftquelle
- 24: Steuereinrichtung
- 25: Transportbehälter
- 26: Transportbehälter
- 27: Handhabungseinrichtung, Roboterarm
- 28: Greifer
- 29: Kamera
- 30: Behälter
- 31: Magazin
- 32: Düse
- 33: Leitung
- 34: cryogene Mediumquelle
- 35: Arbeitsplattform
- 36: automatischer Hammer
- 37: Steuereinrichtung

- 38: Fließband
- 39: erster Demontageabschnitt
- 40: zweiter Demontageabschnitt
- 41: dritter Demontageabschnitt
- 42: vierter Demontageabschnitt
- 43: Roboterarm (1)
- 44: Düse
- 45: Leitung
- 46: Kamera
- 47: Roboterarm (2)
- 48: Hammer
- 49: Magazin
- 50: Hubeinrichtung
- 51: Roboterarm (3)
- 52: Kamera
- 53: Düse
- 54: Leitung
- 55: Stickstoffquelle
- 56: Hammer
- 57: Leitung
- 58: Pressluftquelle
- 59: Roboterarm (4)
- 60: Greifer
- 61: Roboterarm (5)
- 62: Düse
- 63: Kamera
- 64: Leitung
- 65: cryogene Mediumquelle
- 66: Roboterarm (6)
- 67: Greifer
- 68: Hammer
- 69: Auto
- 70: Motorhaube
- 71: Kofferraum
- 72: Fahrgestell
- 73: Greifzange
- 74: Manschette
- 75: Öffnung
- 76: Streifenvorhänge

## Patentansprüche

1. Verfahren zum Trennen eines Werkstücks (2), bei dem zumindest zwei Bauteile (3, 4) in einem Verbindungsbereich (5) miteinander verbunden sind, umfassend folgende Schritte
- Kühlen des Werkstückes (2) zumindest im Verbindungsbereich mit einem cryogenen Medium (7), wodurch der Verbindungsbereich (5) beeinträchtigt wird, und
- Trennen der Bauteile (3, 4) des Werkstücks (2).

2. Verfahren nach Anspruch 1,
**dadurch gekennzeichnet,**
**dass** die Bauteile im Verbindungsbereich direkt oder über ein material- und/oder formschlüssiges Verbindungsmittel (5) miteinander verbunden sind.

3. Verfahren nach Anspruch 2,
**dadurch gekennzeichnet,**
**dass** als Verbindungsmittel (5) Schrauben und/oder Nieten und/oder eine Schweiß- und/oder eine Lötnaht oder ein Kleber vorgesehen sind.

4. Verfahren nach einem der Ansprüche 1 bis 3,
**dadurch gekennzeichnet,**
**dass** als cryogenes Medium (5) Stickstoff und/oder CO₂ verwendet wird.

5. Verfahren nach einem der Ansprüche 1 bis 4,
**dadurch gekennzeichnet,**
**dass** zumindest das Verbindungsmittel (5) auf eine Temperatur von zumindest unter -70°C, vorzugsweise von unter -100°C und insbesondere vorzugsweise -150°C gekühlt wird.

6. Verfahren nach einem der Ansprüche 1 bis 5,
**dadurch gekennzeichnet,**
**dass** das Trennen der Bauteile (3, 4) durch schlagartige mechanische Belastung des Werkstücks erfolgt.

7. Verfahren nach einem der Ansprüche 1 bis 6,
**dadurch gekennzeichnet,**
**dass** das Trennen durch Aufbringen von Zugkräften auf die Bauteile (3, 4) erfolgt

8. Verfahren nach einem der Ansprüche 1 bis 7,
**dadurch gekennzeichnet,**
**dass** das Trennen im gekühlten Zustand erfolgt.

9. Verfahren nach einem der Ansprüche 1 bis 8,
**dadurch gekennzeichnet,**
**dass** das Kühlen durch Tauchen des Werkstücks (2) in ein cryogenes Medium (7) erfolgt.

10. Verfahren nach einem der Ansprüche 1 bis 9,
**dadurch gekennzeichnet,**
**dass** das Kühlen durch lokales Auftragen des cryogenen Mediums (7) erfolgt.

11. Verfahren zum Recyceln eines Werkstücks (2), bei dem zumindest zwei metallische Bauteile (3, 4), über ein material- und/oder formschlüssiges Verbindungsmittel miteinander verbunden sind, wobei die Bauteile (3, 4) des Werkstücks (2) mit einem Verfahren nach einem der Ansprüche 1 bis 10 getrennt werden und im Anschluss geschreddert und einer Wiederverwertung zugeführt werden.

12. Vorrichtung zum Trennen eines Werkstücks (2), bei dem zumindest zwei Bauteile, über ein material- und/oder formschlüssiges Verbindungsmittel (5) miteinander verbunden sind mit einer Benetzungseinrichtung (6, 13, 32, 44, 53, 62) zum Benetzen des Werkstücks (2), zumindest im Bereich des Verbindungsmittels (5), mit einem cryogenen Medium (7).

13. Vorrichtung gemäß Anspruch 12,
**dadurch gekennzeichnet,**
**dass** die Benetzungseinrichtung (6, 13, 32, 44, 53, 62) ein cryogenes Mediumsbad ist.

14. Vorrichtung gemäß Anspruch 12,
**dadurch gekennzeichnet,**
**dass** die Benetzungseinrichtung (6, 13, 32, 44, 53, 62) eine Düse zum Ausgeben eines cryogenen Mediums (7) umfasst.

15. Vorrichtung nach einem der Ansprüche 10 bis 14,
**dadurch gekennzeichnet,**
**dass** eine Einrichtung zum schlagartigen Aufbringen einer mechanischen Belastung auf das Werkstück (2) vorgesehen ist, die beispielsweise als automatisch betriebener Hammer (19) ausgebildet ist.
